(19) Europäisches Patentamt
European Patent Office
Office européen des brevets

(11) **EP 4 155 033 A1**

(12) **EUROPEAN PATENT APPLICATION**

(43) Date of publication:
**29.03.2023 Bulletin 2023/13**

(21) Application number: **21199312.6**

(22) Date of filing: **28.09.2021**

(51) International Patent Classification (IPC):
**B25J 9/00** (2006.01)    **F16M 11/42** (2006.01)
**F16M 11/04** (2006.01)    **F16M 11/06** (2006.01)
**F16M 11/18** (2006.01)    **H04N 7/18** (2006.01)

(52) Cooperative Patent Classification (CPC):
**F16H 19/06; B25J 9/0078; F16H 48/08;**
**F16M 11/043; F16M 11/06; F16M 11/18;**
**F16M 11/425;** F16H 2019/069

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventor: **FARAJI, Salman**
**1024 Ecublens (CH)**

(54) **ROBOT, ROBOTIC SYSTEM AND METHOD FOR MANIPULATING OBJECTS COMPRISING SUCH A ROBOTIC SYSTEM**

(57) The invention concerns a robot (2) comprising at least two pulleys (35), each pulley (35) adapted to carry a cable (3), and at least one transmission (42), wherein each pulley (35) is mechanically coupled to at least another pulley (35) by means of the transmission (42), such that at least a part of rotational motion of one pulley (35) is transferrable to another pulley (35), wherein each pulley (35) is adapted to wind up or wind down a corresponding cable (3) depending on the direction of rotation of the corresponding pulley (3), such that the robot (2) is movable within at least one work plane.

The invention also concerns a robotic system (1) comprising said robot (2), a manipulation device (6) comprising said robotic system (1) and a method for manipulating objects (10), in particular for processing plants.

Fig. 1

**Description**

The invention concerns a robot, a robotic system comprising a robot according to the invention, a manipulation device comprising a robotic system according to the invention and a method for manipulating objects.

Robots or robotic systems, especially those which are suspended from cables, often comprise pulleys or winches outside the floating platform to reduce weight and cable tensions. This leads to an increased complexity in terms of cablings and controlling software in order to control the movement of the robot. Further, as cables cannot exert negative force due to their inability to push an object because of their flexible nature. In cable-driven robots, redundancy can be achieved by employing more cables in their design.

More importantly, as actuators, which are configured to rotate the pulleys, are also far apart, each actuator being connected to the respective pulley. Due to which the actuators need to apply higher forces per cable in order to move said kind of robot as well said actuators cannot help each other. This results in a higher consumption of electric power dissipation and energy consumption. US 687 3355 B1 and EP 331 8369 A1 disclose such robotic systems.

WO 2016 132 284 A1 discloses a system for moving a platform suspended on ropes/ cables, with which equipment such as a camera can be moved in space. The moving of the platform is achieved by means of a so-called endless cable, which is passed over a plurality of positioning drums and is wound or unwound by means of a winding drum, the plurality of positioning drums and the winding drum are arranged on the platform. The cable is further passed over mounting pulleys arranged on a fixed support structure.

The problem to be solved by the present invention is to provide a robot, a robotic system comprising a robot according to the invention, a manipulation device comprising a robotic system according to the invention and a method for manipulating objects, in particular for processing plants, such that a minimization of an overall energy consumption is realized.

The problem is solved by a robot according to claim 1, a robotic system according to claim 11, a manipulation device according to claim 13 and method for manipulating according to claim 14. Advantageous embodiments of the robot are given in subclaims 2 to 10, whereas advantageous embodiments of said robotic system and said method are given in subclaims 12 and 15, respectively.

A first aspect of the invention is a robot comprising at least two pulleys, each pulley adapted to carry a cable and at least one transmission, wherein each pulley is mechanically coupled to at least another pulley by means of the transmission, such that at least a part of rotational motion of one pulley is transferrable to another pulley, wherein each pulley is adapted to wind up or wind down a corresponding cable depending on the direction of rotation of the corresponding pulley, such that the robot is movable within at least one work plane.

The robot is a cable-driven robot comprising at least two pulleys, each pulley adapted to carry a cable. The robot may comprise a casing in which the at least two pulleys are arranged. Each pulley may be in form a winch, upon which a respective cable is attached. One end of each cable is attached to the respective pulley, the cable being wound around the pulley, whereas the other end of the cable can be subjected to a pulling force, thereby increasing the tension in the respective cable.

The robot further comprises at least one transmission. The transmission is a mechanical mechanism, which provides controlled application of power and enables a transmission of motion from one body to another. For example, a transmission may be gearbox, that uses gears and gear trains to provide speed and torque conversions from a rotating power source to another device.

According to the invention each pulley is mechanically coupled to at least another pulley by means of the transmission, such that at least a part of rotational motion of one pulley is transferrable to another pulley. This is of advantage because it enables a transfer of energy, in this case kinetic energy due to the rotation of the pulley, from one pulley to another. Hence, an efficient consumption of energy is achieved as the kinetic energy of one pulley is transferred to another pulley, rather than the energy being dissipated in the form of heat.

Further, each pulley is adapted to wind up or wind down a corresponding cable depending on the direction of rotation of the corresponding pulley, such that the robot is movable within at least one work plane. As mentioned above, each of the at least two cables wound around the respective pulleys, can be subjected to a respective pulling force. The respective pulling force would provide a torque to the respective pulley, which in turn would tend to rotate depending on the orientation of the winding of the cable around it. A similar effect is applicable to the other pulleys as well. In addition, as the pulleys are mechanically coupled to each other by means of the transmission, for example a respective rotation of one pulley due to the torque acting on it would be at least partially transmitted to another pulley which is coupled to said pulley.

Based on the difference in the respective components of the pulling forces in a respective direction, each corresponding pulley would either wind up or wind down the corresponding cable depending on the direction of rotation of the pulley. In addition, the winding up or winding down of the corresponding cable would also depend on the orientation of the winding of the cable around the respective pulley.

Accordingly, a release of the cable in the direction of a higher pulling force component in the respective direction would occur by means of the rotating pulley winding down, whereas a corresponding release of cable from one pulley would lead to a corresponding winding up of another complimenting pulley. As a result of which, the robot is enabled to move due to the net difference of the respective components of the pulling forces in that respective direction, which the wherein the movement of the robot in a work plane is realized by a release or drawing up of the respective cables.

According to an embodiment of the invention, the transmission can be a differential gear, wherein the robot can comprise a plurality of coaxial bevel gears, wherein each pulley is coaxially arranged between two coaxial bevel gears. The differential gear can comprise at least one internal bevel gear, in particular at least two, internal bevel gears, rotationally mounted within a space inside the respective pulley, such that an axis of rotation of each respective internal bevel gear is directed radially, wherein each internal bevel gear can be configured to engage with the two neighboring coaxial bevel gears, to form the differential gear.

Each pulley can comprise a cylindrical outer pulley wall and a cylindrical inner pulley wall, such that the cylindrical outer pulley wall and the cylindrical inner pulley wall enclose the space inside the respective pulley. The cylindrical inner pulley wall encloses a center of the pulley, whereas the cylindrical outer pulley wall and the cylindrical inner pulley wall are concentric to each other. An outer surface of the cylindrical outer pulley wall can be adapted to carry a cable. At least one internal bevel gear, in particular at least two internal bevel gears can be embedded within said space of the respective pulley, such that an axis of rotation of each respective internal bevel gear is directed in a radial direction towards the center of the pulley. Each internal bevel gear can be configured to engage with the two neighboring coaxial bevel gears to form the differential gear. The pulley comprising the internal bevel gear, together with the two neighboring coaxial bevel gears, each on either side of the pulley, can form a respective differential gear.

The axis of rotation of the internal bevel gear embedded within a pulley can be orthogonal to the axis of rotation of the neighboring coaxial bevel gears, each on either side of said pulley. The internal bevel gear is configured to engage with the two neighboring coaxial bevel gears to form the differential gear, such that the rotational speed of the internal bevel gear about its axis is an average of the rotational speeds of the two neighboring coaxial bevel gears. One end of the respective axis of each internal bevel gear can be connected or fixed to an inner side of the cylindrical outer pulley wall of the respective pulley, whereas the other end of the axis can be connected or fixed to an outer side of the cylindrical inner pulley wall, that the side facing the inner side of the cylindrical outer pulley wall of said pulley, such that said axis of the is directed in the radial direction towards the center of the respective pulley. Due to this connection or fixation of the ends of the axis of the internal bevel gear, the rotational speed of the pulley would be same as the rotational speed of the axis of internal bevel gear about the axis of the pulley, wherein the axis of the pulley is orthogonal to the axis of the respective internal bevel gear. Hence, the rotational speed of the pulley being dependent on the rotational speed of the internal bevel gear, the rotational speed of the pulley would also be an average of the rotational speeds of the two neighboring coaxial bevel gears. This in turn would enable a winding up or winding down of the cable wound on the outer surface of the cylindrical outer pulley wall to be released or withdrawn at rate proportional to the average of the rotational speeds of the corresponding neighboring coaxial bevel gears. This is of advantage because the rotational speed of pulley can be efficiently controlled by controlling the rotations of each of the neighboring coaxial bevel gears individually. In other words, the rate which the cable being wound up or wound down to the respective pulley can be efficiently controlled by controlling the rotations of each of the neighboring coaxial bevel gears individually.

According to an embodiment of the invention, the robot can comprise at least two rotary actuators, wherein each actuator can be connected to at least one coaxial bevel gear by means of an actuator transmission such that each actuator is configured to rotate at least one of the pulleys, and wherein each pulley is configured to rotate by means of at least one actuator via the corresponding differential gear. In other words, the actuator can be mechanically coupled with one of the coaxial bevel gears by means of the actuator transmission, such that a rotational motion of the actuator is transferrable to said coaxial bevel gear. As a result, said coaxial bevel gear would rotate, thereby causing a rotation of the internal bevel gear of neighboring pulley, also depending on the degree of rotation of the coaxial bevel gear on the other side of said pulley. As mentioned above, the rotation of the internal bevel gear would enable a rotation of said pulley. Thus, each pulley is configured to rotate by means of said actuator via the corresponding differential gear.

In a similar manner, two actuators, each mechanically coupled to either of the neighboring coaxial bevel gears of a pulley, may be configured to rotate the respective coaxial bevel gear. Thus, a rotational motion from each actuator may be transferred to the corresponding coaxial bevel gear via the respective actuator transmission. Further, the rotational motion of each of the rotating coaxial bevel gear would be transferred to the internal bevel gear of the pulley therebetween, such that the rotational speed of the internal bevel gear is an average of the individual rotational speeds of the neighboring bevel gears. Hence, said pulley would be enabled to rotate by means of two actuators, each being coupled to the respective coaxial bevel gears on either side of said pulley. This is of advantage because this enables to control the release or withdrawal of the wounded cable around said pulley by controlling a rotational motion of each of the two actuators in an efficient manner.

The actuator transmission may comprise an actuator spur gear and a coaxial spur gear engaging with each other, wherein the coaxial spur gear can be fixed to the respective coaxial bevel gear, such that rotational motion of the actuator is transferrable to said respective coaxial bevel gear. The coaxial spur gear and the coaxial bevel gear can be fixed to each other and form a single gear unit. Furthermore, the coaxial spur gear can be fixed in between two coaxial bevel gears to form a single gear unit, wherein the tooth-bearing faces of each of the corresponding coaxial bevel gears is directed in a respective outward opposite direction. This is of advantage, as it enables a stable and simple structure of the actuator transmission, so that at least a part of rotational motion of the actuator can be transferred to the respective coaxial bevel gear via the coaxial spur gear in form a simpler construction as well as in an efficient manner.

Each actuator can be axially connected to a respective motor, in particular a respective electric motor, such that the respective motor is configured to drive the respective actuator. The motor can be axially connected to the actuator spur gear, such that the torque pathway could involve a transmission of torque from the motor to the axial actuator spur gear. The actuator spur gear being engaged to the coaxial spur gear, would transfer the torque to the coaxial spur gear. As the coaxial spur gear of the respective actuator is fixed with the respective coaxial bevel gear and forms a single gear unit, the torque from the coaxial bevel gear can be transmitted to the respective coaxial bevel gear. The respective coaxial bevel gear being mechanically connected to the internal bevel gear of the adjacent pulley, would transmit the torque to the internal bevel gear of said pulley. This in turn would enable the respective pulley to rotate depending on the rotation of the coaxial bevel gear on the other side of the pulley, which can be enabled in a similar manner.

The robot can comprise a shaft passing through the coaxial bevel gears and pulleys, wherein the shaft can be rotationally fixed to at least two coaxial bevel gears on a first section and can be rotationally fixed to one coaxial bevel gear on a second section wherein at least one pulley, in particular two pulleys, can be arranged between the first section and the second section. The first section and the second section are separated by a predefined distance, so that at least one pulley, in particular two pulleys, can be arranged between the first section and the second section. Further, this is of advantage because it would enable a simple and efficient coupling between the at least two coaxial bevel gears on the first section and the one coaxial bevel gear on the second section of the shaft.

Furthermore, the coaxial bevel gears and the pulleys can comprise a similar radius, this would then enable a formation of a cylindrical structure, with the shaft passing though said coaxial bevel gears and said pulleys. This is of advantage because it would enable a formation of compact structure as a whole.

Alternative to the transmission being a differential gear comprising a plurality of bevel gears, a differential gear comprising a plurality of spur gears can be used in the present invention.

According to an embodiment of the invention, the transmission can be a cable-pulley mechanism comprising the at least two pulleys, each pulley being adapted to carry a cable, and wherein the robot comprises at least one rotary actuator adapted to rotate at least one of the at least two pulleys, wherein at least one of the two pulleys is coaxially and rotationally fixed to the at least one actuator. This provides for a transmission as an alternative to a differential gear. Moreover, the use of the cable-pulley mechanism would be cost-effective option and designing such a cable-pulley mechanism would be easier as well. Furthermore, the cable-pulley mechanism would offer flexibility to vary the coupling between the individual pulleys in a very efficient and simpler manner, as per the requirement. As only a rearrangement of the pulleys and cables would lead to a change in the coupling.

Further, the transmission can be a cable-pulley mechanism comprising the at least two pulleys, each pulley being adapted to carry a cable. The robot can comprise at least two rotary actuators adapted to rotate the respective pulleys, wherein each of the at least two actuator is fixed to a respective pulley. This is of advantage because this would provide a coupling of the two actuators in a simpler and an efficient manner.

According to an embodiment of the invention, the cable-pulley mechanism can comprise at least two guiding pulleys each being at least partially wound around by the cable which is further connected to the at least two pulleys, wherein the guiding pulley can be adapted to be attached to an external body, wherein at least a part of rotation of the at least one pulley is transferable to another pulley by means of the cable-pulley mechanism. In other words, a cable is connected between one pulley and another pulley via a respective guiding pulley. The guiding pulley can be attached a respective external body. This is of advantage because this would enable a convenient transfer of a part of the rotational motion of one pulley to the pulley via the respective guiding pulley. Since, each of the two guiding pulleys are fixed to a corresponding external body it would enable the robot to move n a two-dimensional plane, especially between the two respective external bodies. Further, in the case of more than two guiding pulleys, that is three or more, each of which being fixed to a respective external body, then the robot can also be enabled to move in a two-dimensional plane between the three or more external bodies or be enabled to move in a three-dimensional space between the three or more external bodies in an efficient manner. Furthermore, a respective actuator adapted to drive one pulley would be coupled with another actuator adapted to drive the other corresponding pulley, both of the pulleys being connected by means of the cable via the guiding pulley. Hence, it would enable an efficient coupling between the two respective actuators by means of said cable.

The robot can comprise at least two pulleys that are rotationally and coaxially fixed to at least one of the at least two actuators. In other words, two coaxial pulleys can be rotationally fixed to each other and form a single pulley unit. This pulley unit can be mounted on one actuator, such that the pulley unit is rotationally fixed on the actuator. The actuator is adapted to drive the pulley unit, thereby driving both the mutually fixed pulleys of the pulley unit. Each of the two pulleys of the corresponding pulley unit can carry a respective cable. Hence, two cables can be carried by one pulley unit. One cable from a first pulley of said pulley unit can be connected to another single separate pulley or a pulley of a different pulley unit, whereas the other cable from the second pulley of said pulley unit can be connected to a different single separate pulley or a different pulley of another pulley unit other than the one connecting the first pulley of said pulley unit. Therefore, a simpler construction for coupling different pulleys or pulley units, thereby coupling the corresponding actuators can be achieved in an efficient manner.

According to an embodiment, the robot can comprise at least four pulleys and at least four rotary actuators. For example, the robot can comprise four pulleys and four rotary actuators, such that the cables from each of the four pulleys could be pulled along the four cardinal directions, for example the directions north, east, south and west, in a plane, so that the robot can be maneuvered efficiently in any possible direction on a two-dimensional work plane. Accordingly, the robot can also be maneuvered efficiently in any possible direction in a three-dimensional work space when at least two of the four cables are pulled along a direction normal to a two-dimensional plane. In other words, the cable-driven robot could also be used as suspended robot.

According to an embodiment of the invention, each rotary actuator can comprise a motor, the motor being configured to drive the rotary actuator. This is of advantage because it would be a simple and a cost-effective option, as the additional connecting means for mounting and connecting a respective motor for each actuator of the robot can be avoided. Moreover, an incorporation of such a motor within each rotary actuator would enable a compact design of the robot comprising such rotary actuators.

A second aspect of the invention is a robotic system comprising a robot according to the first aspect of the invention, a plurality of cables, wherein the number of cables corresponds to the number of pulleys arranged in the robot, wherein each cable is attached to a respective pulley, and a plurality of fixation means, each fixation means being attachable to respective external bodies, wherein the number of pulleys corresponds to at least the number of pulleys. This enables to provide a robotic system, where the robot is efficiently movable within at least one work plane between the respective external bodies. Furthermore, such a robotic system allows energy saving between all the actuators of the robot and enables a cost-effective and simple design of the robotic system comprising a minimum number of cables and pulleys in order to achieve the desired movement of the robot with the work plane between the respective external bodies. Furthermore, such a robot can be easily carried as a single peace and uninstalled after use and moved around in a comfortable manner.

According to an embodiment of the invention, the robot can be configured to be suspended by means of the plurality of cables, wherein each cable is connected to the respective fixation means. This is of advantage, because this would allow the robot to operate on different terrains in an efficient manner. Such a robot can be adapted to move on terrains of arbitrary inclinations and types, for example mountainous terrains, marshy terrains, rocky terrains or flat terrains.

A third aspect of the invention is a manipulation device comprising the inventive robotic system as well as at least one manipulating unit mechanically connected to the robot for manipulating objects. The manipulating unit can comprise a camera, a cutting tool, a chemical dispenser, a plant processing tool or a tool to which other objects can be attached. Such a manipulation device is of advantage because as per requirement different manipulating units can be replaced or added in simple and efficient manner. Moreover, as the different manipulating units can be connected to the robot, the manipulating device as such would be light to carry or transport without having any attached manipulating units.

A fourth aspect of the invention is a method for manipulating objects, in particular for processing plants, in which the inventive robotic system is provided, wherein the robot is moved by rotating at least one pulley by means of at least one actuator. This is of advantage, because such a method can be used to manipulate objects, in particular for processing plants, in different terrains, such as vineyards or corn fields in an efficient manner.

According to an aspect of the invention, each actuator can be constantly supplied with electrical energy in order to drive a pulley or to provide a brake to the rotational motion of the pulley during winding/ unwinding of the cable. This is of advantage, especially in the case where the robot is suspended, so that the robot can help at a predefined position as per requirement in an efficient manner.

The invention is explained below using the embodiment examples shown in the enclosed drawings. It is shown in

Fig. 1:     a perspective view of an embodiment of a robotic system according to the invention,
Fig. 2:     a schematic view of an embodiment of a manipulation device according to the invention, wherein the manipulation device comprises a robot,
Fig. 3:     an enlarged view of a coaxial bevel gear and a pulley with embedded internal bevel gears,
Fig. 4:     a schematic view of an embodiment of the robot comprising a plurality of transmissions, wherein the transmission is a differential gear,
Fig. 5:     an enlarged view of the plurality of transmissions, wherein each is a respective differential gear

Fig. 6: a schematic view of an embodiment of the robot, wherein the robot comprises a shaft passing through a plurality of coaxial bevel gears, wherein one coaxial bevel gear is rotationally fixed on a first section of the shaft and two coaxial bevel gears are rotationally fixed on a second section of the shaft,

Fig. 7: a schematic view of the embodiment of the robot based on Fig. 6, wherein a coupling between the actuators and the pulleys is depicted,

Fig. 8: a schematic view of an embodiment of the robot comprising a plurality of transmissions, wherein the transmission is a respective cable-pulley mechanism,

Fig. 9: an enlarged view of the embodiment of the robot based on Fig. 8, and

Fig. 10: a schematic view of an embodiment of the robot comprising transmissions in the form of cable-pulley mechanisms, wherein a coupling between the actuators and the pulleys is depicted.

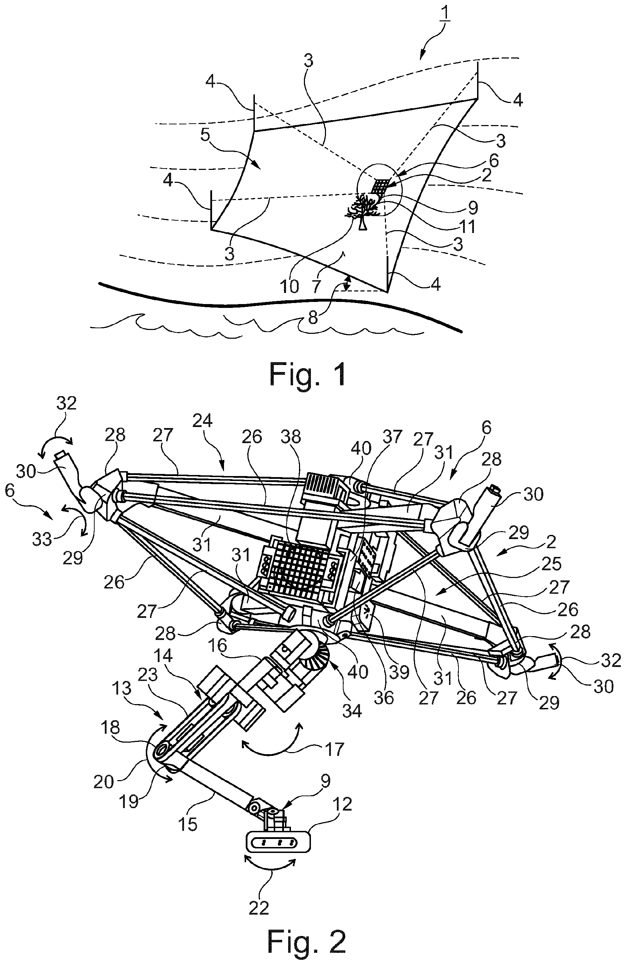

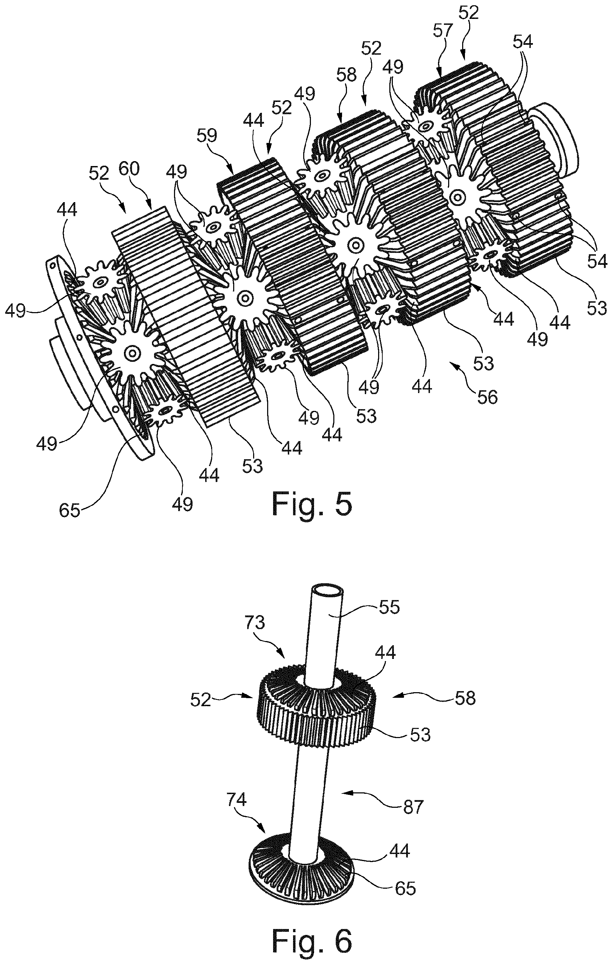

Fig. 1 shows a perspective view of an embodiment of a robotic system 1 comprising a robot 2. The robot 2 is suspended from four cables 3, such that one end of each cable 3 is fixed on to a respective external body 4, for example a respective tree or a respective pole. The other end of each cable 3 is attached to a respective pulley, as shown in Figs. 6 to 10, such that the robot 2 is movable within at least one work plane in the work space 5 between the four external bodies 4. Such a robot 2 is adapted to move on terrains 7 of arbitrary inclinations 8, for example mountainous terrains, marshy terrains, rocky terrains or flat terrains.

The robot 2 is a part of a manipulation device 6. The manipulation device 6 comprises a manipulation unit 9 mechanically connected to the robot 2 for manipulating objects 10, for example a tree. For example, the manipulating unit 9 is a pruning device 11 for cutting certain dried-up branches of the tree, which is the object in this case. The manipulation device 6, that is the robot 2 is movable such that the manipulating unit 9 could optimally reach to the desired point of the object 10, which needs to be manipulated as per requirement.

Fig. 2 depicts a schematic view of an embodiment of the manipulation device 6 comprising the robot 2 and the manipulating unit 9 connected to the robot 2. The manipulating unit 9 is a camera 12. The manipulating unit 9 is connected to the robot 2 by means of a mechanical arm 13. The mechanical arm 13 is attached to the robot 2 at one end and comprises the camera 12 on the other end. The mechanical arm 13 comprises a first section 14 and a second section 15, the first section 14 is connected to the robot 2 at a first end 16, such that the first section 14 is rotatable along a direction depicted by the first rotation arrow 17, said rotational motion can be realized by means of a bevel gear arrangement 34. The second end 18 of the first section 14 is connected to a first end 19 of the second section 15, such that the second section 15 is rotatable in a direction depicted by the second rotation arrow 20, said rotational motion can be realized by means of a belt drive arrangement 23. The second end 21 of the second section 15 is connected to the camera 12, such that the camera 12 is rotatable in a direction depicted by the third rotation arrow 22. Hence, the manipulation device 6 is configured such that the manipulating unit 9 can optimally operate on a required point by means of the degrees of freedom offered to the movement and positioning of the manipulating unit 9 by means of the mechanical arm 13 in addition to the movement of the robot 2 suspended by the four cables 3, as shown in Fig. 1, so that the robot 2 can be optimally moved with the work space 5 as per requirement.

The robot 2 comprises a diamond-shaped frame 24 enclosing a frame space 25. The diamond-shaped frame 24, is in form of a pyramid with a square base. The square base is formed by means of base connecting rods 26, whereas the pyramid shape is formed by means of side connecting rods 27, such that one end of each of the side connecting rods 27 is connected to a respective end of corresponding base connecting rods 26. The connections are depicted by the frame ends 28. The other ends of the side connecting rods 27 are connected to the casing 40 enclosed within the frame space 25.

Each frame end 28 comprises a respective cable guide 29, each of which is configured to receive a respective cable 3, to pass through a guide respective guide structure 30 via a corresponding cable duct 31. Each guide structure 30 is configured to rotate along directions depicted by a fourth rotation arrow 32, wherein the angle of rotation of the guide structure 30 along the fourth rotation arrow 32 can range between -45° to +45°. Furthermore, each guide structure 30 is configured to rotate along directions depicted by a fifth rotation arrow 33 in a plane of rotation normal to the plane of rotation depicted by the fourth rotation arrow 32, wherein the angle of rotation of the guide structure 30 along the fifth rotation arrow 33 can range between -75° to +75°. The guide structure 30 provides two degrees of freedom for the positioning of the corresponding cable 3 passing through the respective guide structure 30. Furthermore, the guide structure 30 can comprise rotary encoders, not shown in figures, to measure cable directions with the rotary encoders in order to locate the robot 2 in the work space 5.

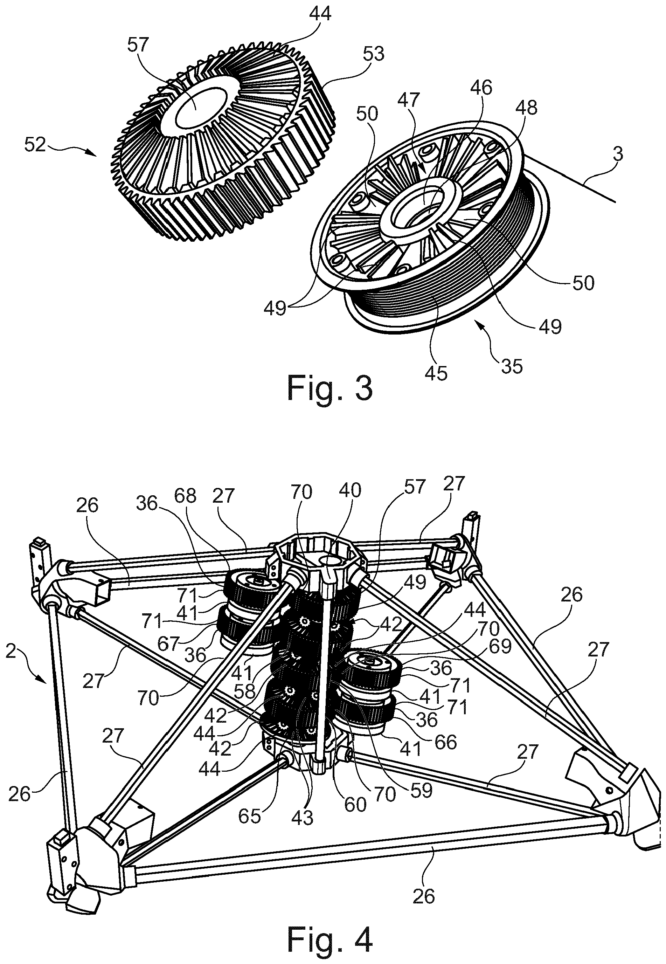

The cable 3, whose one end is fixed to an external body 4, is passed through the guide structure 30 via the cable duct 31 and is attached to a respective pulley 35, wherein each pulley 35 is adapted to carry the corresponding cable 3, as shown in Fig. 3. The robot 2 further comprises four actuators 36, as shown in Fig. 4. Each actuator 36 is configured to rotate at least one pulley 35. In order to control the activation of the respective actuators 36, the robot 2 comprises an actuator controller 37. The robot 2 comprises an actuator fan 38, for example for cooling the actuators 36 as well as the actuator controller 37. The robot 2 further comprises an electronic control unit 39 including a processor, which may be configured to control the movement and positioning of the robot 2 and that of the manipulating unit 9 as per requirement for a treatment of the manipulating object 10. The four actuators 36, the four pulleys 35, four motors 41, wherein each motor 41 is configured to drive each of the corresponding actuator 36, the actuator controller 37 and the electronic control unit 39 are installed within the casing 40.

As shown in Fig. 3, each pulley 35 is adapted to wind up or wind out the corresponding attached cable 3. The pulley 35 comprises a cylindrical outer pulley wall 45 and a cylindrical inner pulley wall 46. The cylindrical outer pulley wall 45 and the cylindrical inner pulley wall 46 are concentric to each other. The cylindrical outer pulley wall 45 and the cylindrical inner pulley wall 46 enclose a first pulley space 47 and the cylindrical inner pulley wall 46 encloses a second pulley space 48 enclosing a center of the pulley 35. One of the cables 3 is attached to an outer surface of the cylindrical outer pulley wall 45 and is wound around the outer surface of the cylindrical outer pulley wall 45.

A plurality of internal bevel gears 49 are embedded within the first pulley space 47, wherein a respective axis of rotation of each of the respective internal bevel gear 49 is directed in a radial direction towards the center of the respective pulley 35. Each internal bevel gear 49 is rotationally mounted within the first pulley space 47 inside the respective pulley 35, such that the axis of rotation of each respective internal bevel gear 49 is directed radially. Further spokes 50 are mounted within the first pulley space 47, such that each spoke 50 is arranged between to radially neighboring internal bevel gears 49. Each spoke 50 is directed in the radial direction and joins the cylindrical outer pulley wall 45 and the cylindrical inner pulley wall 46. The plurality of spokes 50 provide additional structural strength to the corresponding pulley 35.

According to the embodiment of the robot 2 depicted in Figs. 4 and 5, the robot 2 comprises four pulleys 35 and four transmissions 42, wherein the cylindrical outer pulley wall 45 and the cylindrical inner pulley wall 46 of each pulley are omitted for the sake of understandability. The transmission 42 is a differential gear 43. The robot 2 comprises a plurality of coaxial bevel gears 44, wherein each pulley 35 is coaxially arranged between two coaxial bevel gears 44. The teeth of the respective coaxial bevel gear are directed radially with an axial directed inclination at the center of the respective coaxial bevel gear 44. In other words, the tooth-bearing face of the coaxial bevel gear 44 is conically shaped.

The differential gear 43 comprises the plurality of internal bevel gears 49 of the pulley, which is arranged between two coaxial bevel gears 44. The two coaxial bevel gears 44 on either side of the pulley are arranged such that the conically shaped tooth-bearing face of the respective coaxial bevel gear 44 faces the pulley 35 therebetween.

The axis of rotation of the internal bevel gear 49 is be orthogonal to the axis of rotation of the neighboring coaxial bevel gears 44, each on either side of the pulley 35. The internal bevel gears 49 are configured to engage with the two neighboring coaxial bevel gears 44, to form the differential gear 43, such that the rotational speed of each of the respective internal bevel gear 49 about its axis is an average of the rotational speeds of the two neighboring coaxial bevel gears 44.

One end of the respective axis of each internal bevel gear 49 is fixed to an internal side of the cylindrical outer pulley wall 45 of the respective pulley 35, whereas the other end of the axis of each of the internal bevel gears 49 is fixed to an outer side of the cylindrical inner pulley wall 46, wherein said outer side of the cylindrical inner pulley wall 46 faces the first pulley space 47.

Due to this fixation of the ends of the axis of each of the embedded internal bevel gear 49 of the pulley 35, the rotational speed of the pulley 35 about its axis would be same as the rotational speed of the axis of internal bevel gear 49 about said axis of the pulley 35.

Since, the rotational speed of the pulley 35 is dependent on the rotational speed of the internal bevel gear 44, the rotational speed of the pulley 35 would also be an average of the rotational speeds of the two neighboring coaxial bevel gears 44. This in turn would enable a winding up or winding down of the cable 3 wound on the outer surface of the cylindrical outer pulley wall 45 to be released or withdrawn at rate at which the respective pulley 35 rotates. In other words, the rate at which the cable 3, that is wound around the pulley 35, is released or withdrawn is proportional to the average of the rotational speeds of the corresponding neighboring coaxial bevel gears 44 of said pulley 35.

A gear unit 52 is formed by fixing to coaxial bevel gears 44 and a coaxial spur gear 53 therebetween, such that the respective tooth-bearing face of each of the two coaxial bevel gears 44 faces a respective side, that is opposite to the side where the corresponding coaxial spur gear 53 is arranged therebetween. In other words, the gear unit 52 has a cylindrical structure with an outwardly conical shaped front side comprising a coaxial bevel gear 44, wherein a normal to said front side is parallel to the axis of the gear unit 52 or the corresponding coaxial bevel gear 44. The gear unit 52 comprises an outwardly conical shaped back side comprising another coaxial bevel gear 44, wherein a normal to said front side is parallel to the axis of the gear unit 52 or the corresponding coaxial bevel gear 44. Further, the gear unit 52 comprises a coaxial spur gear 53, which is fixed between each of the aforementioned two coaxial bevel gears 44, such that the coaxial spur gear 53 forms the curved side of the cylindrical structure of the gear unit 52. The tooth-bearing face of the coaxial spur gear are directed in an axial direction which is parallel to the axis of rotation of the corresponding gear unit 52. The coaxial spur gear 53 is fixed to each coaxial bevel gear 44 on either side by means of screws 54. Other fixing means known to a person skilled in the art, such as nails or welding can also be used to fix the coaxial spur gear 53 with the coaxial bevel gears 44. Furthermore, the gear unit 52 can be also produced as a single unit, for example using molding.

The tooth-bearing face of the respective coaxial bevel gear 44 comprises a circular space 51 around its respective center, such that the diameter of the circular space 51 equal to the diameter of the second pulley space 48.

As shown in Fig. 6, the robot 2 comprises a shaft 55 which passes through the coaxial bevel gears 44 and the pulleys 35. The diameter of the shaft 55 is chosen such that the shaft 55 passes through the second space of the respective pulley 35 as well as the circular space 51 of the respective coaxial bevel gear 44. Accordingly, the coaxial bevel gears 44, the gear units 52 comprising the coaxial bevel gears 44 and the coaxial spur gear 53, respectively, and the pulleys 35 arranged between two coaxial bevel gears 44 or between two gear units 52, are arranged coaxially on the shaft 55, and are arranged in form of a cylindrical unit 56.

As shown in Fig. 4, 5 and 7, the robot 2 comprises four actuators 36 and a cylindrical unit 56. The cylindrical unit 56 comprises four gear units 52 including a first gear unit 57, a second gear unit 58, a third gear unit 59 and a fourth gear unit 60. A first pulley 61 is arranged between the first gear unit 57 and the second gear unit 58, a second pulley 62 is arranged between the second gear unit and the third gear unit 59, a third pulley 63 is arranged between the third gear unit 59 and the fourth gear unit 60, and a fourth pulley 64 is arranged between the fourth gear 60 and an end coaxial bevel gear 65.

The four actuators 36 include a first actuator 66, a second actuator 67, a third actuator 68 and fourth actuator 69. Each actuator 36 is connected to a corresponding gear unit 52 by means of an actuator transmission 70 such that each actuator 36 is configured to rotate at least one of the pulleys 35, and wherein each pulley 35 is configured to rotate by means of at least one actuator 36 via the corresponding differential gear 43.

The actuator transmission 70 comprises an actuator spur gear 71 and a coaxial spur gear 53 engaging with each other, wherein the coaxial spur gear 53 is configured to engage with the respective coaxial bevel gear 44, such that rotational motion of the actuator 36 is transferrable to said respective coaxial bevel gear 44.

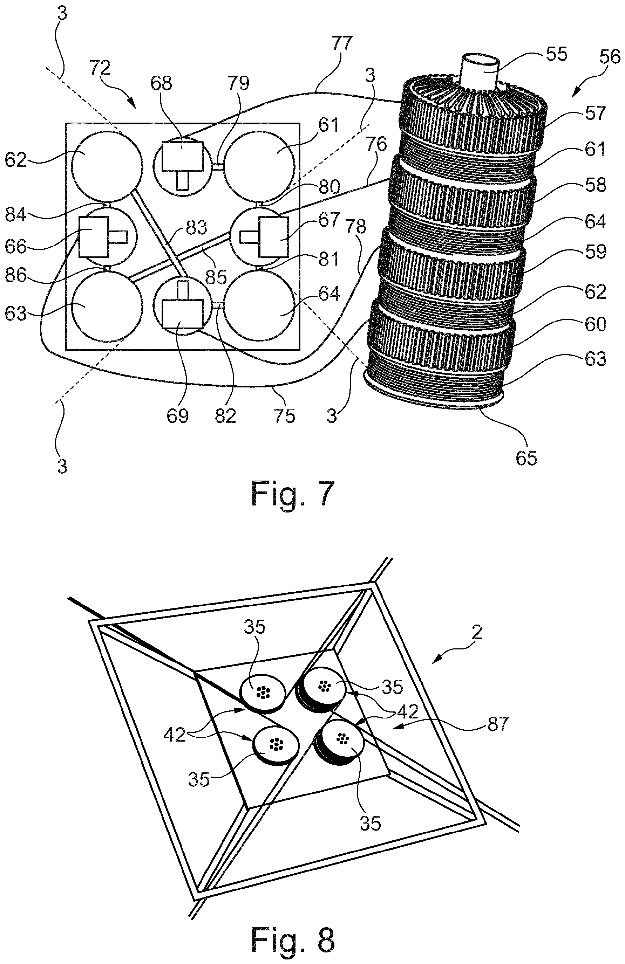

The actuator spur gear 71 of the first actuator 66 engages with the coaxial spur gear 53 of the fourth gear unit 60, so that the rotational motion of the first actuator 66 is transferred to the respective coaxial bevel gears 44 of the fourth gear unit 60. This connection of the first actuator 66 with the fourth gear unit 60 is depicted by the first connection line 75 in mechanical connection diagram 72 of Fig. 7.

The actuator spur gear 71 of the second actuator 67 engages with the coaxial spur gear 53 of the second gear unit 58, so that the rotational motion of the second actuator 67 is transferred to the respective coaxial bevel gears 44 of the second gear unit 58. This connection of the second actuator 67 with the second gear unit 58 is depicted by the second connection line 76 in mechanical connection diagram 72.

The actuator spur gear 71 of the third actuator 68 engages with the coaxial spur gear 53 of the first gear unit 57, so that the rotational motion of the third actuator 68 is transferred to the respective coaxial bevel gears 44 of the first gear unit 57. This connection of the third actuator 68 with the first gear unit 57 is depicted by the third connection line 77 in mechanical connection diagram 72.

The actuator spur gear 71 of the fourth actuator 69 engages with the coaxial spur gear 53 of the third gear unit 59, so that the rotational motion of the fourth actuator 69 is transferred to the respective coaxial bevel gears 44 of the third gear unit 59. This connection of the fourth actuator 69 with the third gear unit 59 is depicted by the fourth connection line 78 in mechanical connection diagram 72.

The first pulley 61 is arranged between the first gear unit 57 and the second gear unit 58, such that the internal bevel gears 49 of the first pulley 61 are engaged with the coaxial bevel gear 44 of the first gear unit 57 as well as with the coaxial bevel gear 44 of the second gear unit 58. Hence, the rotational speed of the first pulley 61 would be an average of the rotational speed of the coaxial bevel gear 44 of the first gear unit 57 and that of the coaxial bevel gear 44 of the second gear unit 58. In other words, the first pulley 61 is configured to rotate by means of the third actuator 66 which is connected to the first gear unit 57, as depicted by the third connection line 77. Further, the first pulley 61 is also configured to rotate by means of the second actuator 67 which is connected to the second gear unit 58, as is depicted by the second connection line 76. The activation of the rotation of the first pulley 61 by means of the third actuator 68 is shown by the first activation line 79, whereas the activation of the rotation of the first pulley 61 by means of the second actuator 67 is shown by the second activation line 80.

With regards to the fourth pulley 64, the fourth pulley 64 is arranged between the second gear unit 58 and the third gear unit 59, such that the internal bevel gears 49 of the fourth pulley 64 are engaged with the coaxial bevel gear 44 of the second gear unit 58 as well as with the coaxial bevel gear 44 of the third gear unit 59. Hence, the rotational speed of the fourth pulley 64 would be an average of the rotational speed of the coaxial bevel gear 44 of the second gear unit 58 and that of the coaxial bevel gear 44 of the third gear unit 59. In other words, the fourth pulley 64 is configured to rotate by means of the second actuator 67 which is connected to the second gear unit 58, as depicted by the second connection line 76. Further, the fourth pulley 64 is also configured to rotate by means of the fourth actuator 69 which is connected to the third gear unit 59, as depicted by the fourth connection line 78. The activation of the rotation of the fourth pulley 64 by means of the second actuator 67 is shown by the third activation line 81, whereas the activation of the rotation of the fourth pulley 64 by means of the fourth actuator 69 is shown by the fourth activation line 82.

With regards to the second pulley 62, the second pulley 62 is arranged between the third gear unit 59 and the fourth gear unit 60, such that the internal bevel gears 49 of the second pulley 62 are engaged with the coaxial bevel gear 44 of the third gear unit 59 as well as with the coaxial bevel gear 44 of the fourth gear unit 60. Hence, the rotational speed of the second pulley 62 would be an average of the rotational speed of the coaxial bevel gear 44 of the third gear unit 59 and that of the coaxial bevel gear 44 of the fourth gear unit 60. In other words, the second pulley 62 is configured to rotate by means of the fourth actuator 67, which is connected to the third gear unit 59, as depicted by the fourth connection line 78. Further, the second pulley 62 is also configured to rotate by means of the first actuator 66, which is connected to the fourth gear unit 60, as is depicted by the first connection line 75. The activation of the rotation of the second pulley 62 by means of the fourth actuator 69 is shown by the fifth activation line 83, whereas the activation of the rotation of the second pulley 62 by means of the first actuator 66 is shown by the sixth activation line 84.

In Fig. 6, a first coupling 96 between the second gear unit 58 and the end coaxial bevel gear 65 is depicted, especially the first coupling 96 between the first actuator 66 and the second actuator 67 is shown. The second gear unit 58 comprising two coaxial bevel gears 44 and one coaxial spur gear 53 is rotationally fixed on a first section 73 of the shaft 55, whereas the end coaxial bevel gear 65 is rotationally fixed on a second section 74 of the shaft 55. This means that when the second gear unit 58 is rotated by means of the second actuator 58 at a rotational speed, the end coaxial bevel gear 65 would also rotate with the same rotational speed.

With regards to the third pulley 63, the third pulley 63 is arranged between the fourth gear unit 60 and the end coaxial bevel gear 65, such that the internal bevel gears 49 of the third pulley 63 are engaged with the coaxial bevel gear 44 of the fourth gear unit 60 as well as with the end coaxial bevel gear 65. Hence, the rotational speed of the third pulley 63 would be an average of the rotational speed of the coaxial bevel gear 44 of the fourth gear unit 60 and that of the end coaxial bevel gear 65. As mentioned above, an activation of the rotation of the second gear unit 58 by means of the second actuator 67 would also enable an activation of the rotation of the end coaxial bevel gear 65. Hence, the third pulley 63 is configured to rotate by means of the second actuator 67, which is connected to the second gear unit 58. This in turn enables to rotate the end coaxial bevel gear 65 by means of the first coupling 96. Further, the third pulley 63 is configured to rotate by means of the first actuator 66, which is connected to the fourth gear unit 60, as depicted by the first connection line 75. The activation of the rotation of the third pulley 63 by means of the second actuator 67 is shown by the seventh activation line 85, whereas the activation of the rotation of the third pulley 63 by means of the first actuator 66 is shown by the eighth activation line 86.

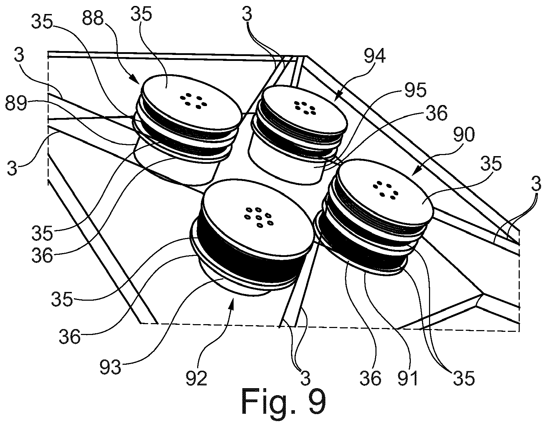

According to the embodiment of the robot 2 depicted in Figs. 8 to 11, the robot 2 comprises a plurality of pulleys 35, which can also be referred to as drums, a plurality of transmissions 42 and plurality of actuators 36. Each transmission 42 is a cable-pulley mechanism 87, which can also be referred to as a cable-coupled mechanism. As shown in Fig. 9, the cable-pulley mechanism 87 includes a first cable-pulley mechanism 88 comprising two pulleys 35, wherein each pulley 35 is attached to a respective cable 3, which is wound on each of the respective pulley 35 of the first cable-pulley mechanism 88. The first cable-pulley mechanism 88 is coaxially and rotationally fixed to a first coaxial actuator 89, which is configured to rotate the first cable-pulley mechanism 88, for example by means of a motor 41 included within the first coaxial actuator 89.

The cable-pulley mechanism 87 includes a second cable-pulley mechanism 90 comprising three pulleys 35, wherein each pulley 35 is attached to a respective cable 3, which is wound on each of the respective pulley 35 of the second cable-pulley mechanism 90. The second cable-pulley mechanism 90 is coaxially and rotationally fixed to a second coaxial actuator 91, which is configured to rotate the second cable-pulley mechanism 90, for example by means of a motor included within the second coaxial actuator 91.

The cable-pulley mechanism 87 includes a third cable-pulley mechanism 92 comprising one pulley 35, wherein the one pulley 35 is attached to a corresponding cable 3, which is wound on the corresponding pulley 35 of the third cable-pulley mechanism 92. The third cable-pulley mechanism 92 is coaxially and rotationally fixed to a third coaxial actuator 93, which is configured to rotate the third cable-pulley mechanism 92, for example by means of a motor included within the third coaxial actuator 93.

The cable-pulley mechanism 87 includes a fourth cable-pulley mechanism 94 comprising two pulleys 35, wherein each pulley 35 is attached to a respective cable 3, which is wound on the corresponding pulley 35 of the fourth cable-pulley mechanism 94. The fourth cable-pulley mechanism 94 is coaxially and rotationally fixed to a fourth coaxial actuator 95, which is configured to rotate the fourth cable-pulley mechanism 94, for example by means of a motor included within the fourth coaxial actuator 95.

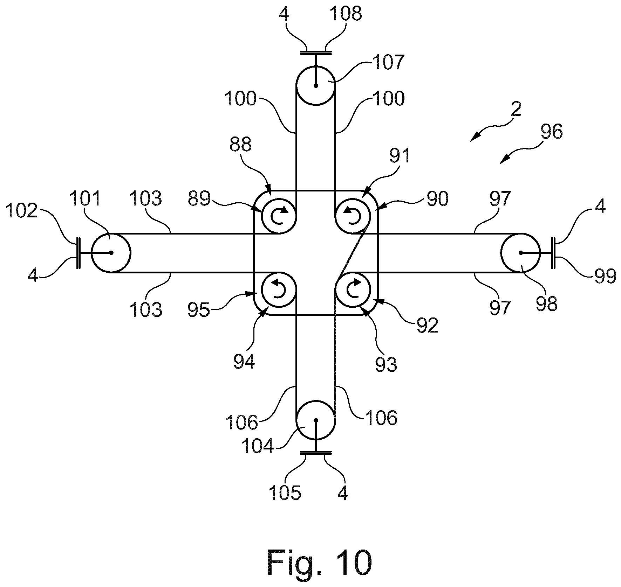

In Fig. 10, a coupling 96 between the four coaxial actuators 88, 91, 93 and 95 is shown.

The first cable 97 is connected to the single pulley 35 of the third cable-pulley mechanism 92 and a first of the three pulleys 35 of the second cable-pulley mechanism 90 via the first guiding pulley 98, wherein the first guiding pulley 98 is adapted to be attached the first external body 99. In other words, the third coaxial actuator 93 is coupled to the second coaxial actuator 91 by means of the first cable 97.

The second cable 100 is connected to a second of the two pulleys 35 of the second cable-pulley mechanism 90 and a first of the two pulleys 35 of the first cable-pulley mechanism 88 via the fourth guiding pulley 107, wherein the fourth guiding pulley 107 is adapted to be attached the fourth external body 108. In other words, the second coaxial actuator 91 is coupled to the first coaxial actuator 89 by means of the second cable 100.

The third cable 103 which is connected to a second of the two pulleys 35 of the first cable-pulley mechanism 88 and a second of the two pulleys 35 of the fourth cable-pulley mechanism 94 via the second guiding pulley 101, wherein the second guiding pulley 101 is adapted to be attached the second external body 108. In other words, the first coaxial actuator 89 is coupled to the fourth coaxial actuator 95 by means of the third cable 103.

The fourth cable 106 is connected to a second of the two pulleys 35 of the fourth cable-pulley mechanism 94 and a third of the three pulleys 35 of the second cable-pulley mechanism 90 via the second guiding pulley 101, wherein the third guiding pulley 104 is adapted to be attached the third external body 106. In other words, the fourth coaxial actuator 94 is coupled to the second coaxial actuator 91 by means of the fourth cable 106.

The coupling 96 of four coaxial actuators 88, 91, 93 and 95 according to the embodiment of the robot 2 comprising the cable-pulley mechanism 88 as shown in Fig. 10, is depicted by the coupling matrix Q.

$$ Q = \begin{bmatrix} 0 & -0.5 & -0.5 & 0 \\ 0.5 & 0.5 & 0 & 0 \\ -0.5 & 0 & 0 & -0.5 \\ 0 & 0.5 & 0 & 0.5 \end{bmatrix} $$

V refers to Velocity and $V_{actuator}$ refers to the velocity vector of the four actuators 36 according to first coupling 96, wherein

$$ V_{actuator,} = \begin{bmatrix} V_{\text{First coaxial actuator 89}} \\ V_{\text{Second coaxial actuator 91}} \\ V_{\text{Third coaxial actuator 93}} \\ V_{\text{Fourth coaxial actuator 95}} \end{bmatrix} $$

and $V_{cable}$ refers to the velocity vector of the four cables 3 according to first coupling 96, wherein

$$ V_{cable} = \begin{bmatrix} V_{\text{First cable 97}} \\ V_{\text{Second cable 100}} \\ V_{\text{Third cable 103}} \\ V_{\text{Fourth cable 106}} \end{bmatrix} $$

Further $V_{actuator}$ is related to $V_{cable}$ according to the coupling 96 as follows, wherein $Q^{-1}$ refers to an inverse of the coupling matrix Q.

$$ v_{actuator} = Q^{-1} v_{cable} $$

F refers to Force and $F_{actuator}$ refers to the Force vector of the four actuators 36 according to first coupling matrix Q, wherein

$$ F_{actuator} = \begin{bmatrix} F_{\text{First coaxial actuator 89}} \\ F_{\text{Second coaxial actuator 91 1}} \\ F_{\text{Third coaxial actuator 93}} \\ F_{\text{Fourth coaxial actuator 95}} \end{bmatrix} $$

and $F_{cable}$ refers to the force vector of the four cables 3 according to first coupling 96, wherein

$$ F_{cable} = \begin{bmatrix} F_{\text{First cable 97}} \\ F_{\text{Second cable 100}} \\ F_{\text{Third cable 103}} \\ F_{\text{Fourth cable 106}} \end{bmatrix} $$

Further $F_{actuator}$ is related to $F_{cable}$ according to the coupling 96 as follows, wherein $Q^T$ refers to a transpose of the coupling matrix Q.

$$ F_{actuator} = Q^T F_{cable} $$

The inventive robot 2, as well as the robotic system 1 comprising said robot 2, the manipulation device 6 comprising said robotic system 1 and the method for manipulating objects 10, in particular for processing plants, enable a minimization of an overall energy consumption by reducing actuator torques, current and thus, heat dissipation.

**List of reference signs**

| | |
|---|---|
| Robotic system | 1 |
| Robot | 2 |
| Cable | 3 |
| External body | 4 |
| Work space | 5 |
| Manipulation device | 6 |
| Terrain | 7 |

(continued)

| | |
|---|---|
| Inclination | 8 |
| Manipulating unit | 9 |
| Object | 10 |
| Pruning device | 11 |
| Camera | 12 |
| Mechanical arm | 13 |
| First section of the mechanical arm | 14 |
| Second section of the mechanical arm | 15 |
| First end of the first section | 16 |
| First rotation arrow | 17 |
| Second end of the first section | 18 |
| First end of the second section | 19 |
| Second rotation arrow | 20 |
| Second end of the second section | 21 |
| Third rotation arrow | 22 |
| Belt drive arrangement | 23 |
| Diamond-shaped frame | 24 |
| Frame space | 25 |
| Base connecting rod | 26 |
| Side connecting rod | 27 |
| Frame ends | 28 |
| Cable guide | 29 |
| Guide structure | 30 |
| Cable duct | 31 |
| Fourth rotation arrow | 32 |
| Fifth rotation arrow | 33 |
| Bevel gear arrangement | 34 |
| Pulley | 35 |
| Actuator | 36 |
| Actuator controller | 37 |
| Actuator fan | 38 |
| Electronic control unit | 39 |
| Casing | 40 |
| Motor | 41 |
| Transmission | 42 |
| Differential gear | 43 |
| Coaxial bevel gear | 44 |
| Cylindrical outer pulley wall | 45 |
| Cylindrical inner pulley wall | 46 |
| First pulley space | 47 |
| Second pulley space | 48 |
| Internal bevel gear | 49 |
| Spoke | 50 |
| Circular space | 51 |
| Gear unit | 52 |
| Coaxial spur gear | 53 |
| Screw | 54 |
| Shaft | 55 |
| Cylindrical unit | 56 |
| First gear unit | 57 |
| Second gear unit | 58 |

(continued)

| | |
|---|---|
| Third gear unit | 59 |
| Fourth gear unit | 60 |
| First pulley | 61 |
| Second pulley | 62 |
| Third pulley | 63 |
| Fourth pulley | 64 |
| End coaxial bevel gear | 65 |
| First actuator | 66 |
| Second actuator | 67 |
| Third actuator | 68 |
| Fourth actuator | 69 |
| Actuator transmission | 70 |
| Actuator spur gear | 71 |
| Mechanical connection diagram | 72 |
| First section | 73 |
| Second section | 74 |
| First connection line | 75 |
| Second connection line | 76 |
| Third connection line | 77 |
| Fourth connection line | 78 |
| First activation line | 79 |
| Second activation line | 80 |
| Third activation line | 81 |
| Fourth activation line | 82 |
| Fifth activation line | 83 |
| Sixth activation line | 84 |
| Seventh activation line | 85 |
| Eighth activation line | 86 |
| Cable-pulley mechanism | 87 |
| First cable-pulley mechanism | 88 |
| First coaxial actuator | 89 |
| Second cable-pulley mechanism | 90 |
| Second coaxial actuator | 91 |
| Third cable-pulley mechanism | 92 |
| Third coaxial actuator | 93 |
| Fourth cable-pulley mechanism | 94 |
| Fourth coaxial actuator | 95 |
| Coupling | 96 |
| First cable | 97 |
| First guiding pulley | 98 |
| First external body | 99 |
| Second cable | 100 |
| Second guiding pulley | 101 |
| Second external body | 102 |
| Third cable | 103 |
| Third guiding pulley | 104 |
| Third external body | 105 |
| Fourth cable | 106 |
| Fourth guiding pulley | 107 |
| Fourth external body | 108 |

**Claims**

1. Robot (2) comprising:

   at least two pulleys (35), each pulley (35) adapted to carry a cable (3); and
   at least one transmission (42),
   wherein each pulley (35) is mechanically coupled to at least another pulley (35) by means of the transmission (42), such that at least a part of rotational motion of one pulley (35) is transferrable to another pulley (35),
   wherein each pulley (35) is adapted to wind up or wind down a corresponding cable (3) depending on the direction of rotation of the corresponding pulley (35), such that the robot (2) is movable within at least one work plane.

2. Robot (2) according to claim 1, wherein the transmission (42) is a differential gear (43),

   wherein the robot (2) comprises a plurality of coaxial bevel gears (44), wherein each pulley (35) is coaxially arranged between two coaxial bevel gears (44),
   wherein the differential gear (43) comprises at least one internal bevel gear (49), in particular at least two internal bevel gears (49), rotationally mounted within a space inside the respective pulley (35), such that an axis of rotation of each respective internal bevel gear (49) is directed radially, wherein each internal bevel gear (49) is configured to engage with the two neighboring coaxial bevel gears (44) to form the differential gear (43).

3. Robot (2) according to claims 2 or 3, wherein the robot (2) comprises at least two rotatable actuators (36), wherein each actuator (36) is connected to at least one coaxial bevel gear (44) by means of an actuator transmission (42) such that each actuator (36) is configured to rotate at least one of the pulleys (35); and wherein each pulley (35) is configured to rotate by means of at least one actuator (35) via the corresponding differential gear (43).

4. Robot (2) according to claim 3, wherein the actuator transmission (42) comprises an actuator spur gear (71) and a coaxial spur gear (53) engaging with each other, wherein the coaxial spur gear (53) is configured to engage with the respective coaxial bevel gear (44), such that rotational motion of the actuator (36) is transferrable to said respective coaxial bevel gear (44).

5. Robot (2) according to any one of claims 2 to 4, wherein the robot (2) comprises a shaft (55) passing through the coaxial bevel gears (44) and pulleys (35), wherein the shaft (55) is rotationally fixed to at least two coaxial bevel gears (44) on a first section (73) and is rotationally fixed to one coaxial bevel gear (44) on a second section (74), wherein at least one pulley (35), in particular two pulleys (35), are arranged between the first section (73) and the second section (74).

6. Robot (2) according to claim 1, wherein the transmission (42) is a cable-pulley mechanism (87, 88, 90, 92, 94) comprising the at least two pulleys (35), wherein the robot (2) comprises at least one rotary actuator (36, 89, 91, 93, 95) adapted to rotate at least one of the at least two pulleys (35), wherein at least one of the two pulleys (35) is coaxially and rotationally fixed to the at least one actuator (36, 89, 91, 93, 95).

7. Robot (2) according to claim 6, wherein the cable-pulley mechanism (87) comprises at least two guiding pulleys (98, 101, 104, 108) each being at least partially wound around by the cable (3, 97, 100, 103, 106) which is further connected to the at least two pulleys (35), wherein the guiding pulley (98, 101, 104, 108) is adapted to be attached to an external body (4, 99, 102, 106, 108), wherein at least a part of rotation of the at least one pulley (35) is transferable to another pulley (35) by means of the cable-pulley mechanism (87, 88, 90, 92, 94).

8. Robot (2) according to claim 6 or 7, wherein at least two pulleys (35) are rotationally and coaxially fixed to at least one of the at least two actuators (36, 89, 91, 93, 95).

9. Robot (2) according to any one of the above mentioned claims, wherein the robot (2) comprises at least four pulleys (35) and at least four rotary actuators (36).

10. Robot (2) according to any of claims 3 to 5 or 7 to 9, wherein each rotatable actuator (36) comprises a motor (41), the motor (41) being configured to drive the rotary actuator (36).

11. Robotic system (1) comprising:

    a robot (2) according to any of claims 1 to 10;
    a plurality of cables (3), wherein the number of cables (3) corresponds to the number of pulleys (35) arranged in the robot (2), wherein each cable (3) is attached to a respective pulley (35); and
    a plurality of fixation means, each fixation means being attachable to respective external bodies (4, 99, 102, 106, 108), wherein the number of pulleys (35) corresponds to at least the number of fixation means.

**12.** Robotic system (1) according to claim 11, wherein the robot (2) is configured to be suspended by means of the plurality of cables (3), wherein each cable (3) is connected to the respective fixation means.

**13.** Manipulation device (6) comprising a robotic system (1) according to claims 11 or 12 as well as at least one manipulating unit (9) mechanically connected to the Robot (2) for manipulating objects (10).

**14.** Method for manipulating objects (10), in particular for processing plants, in which a robotic system (1) of claims 11 or 12 is provided, wherein the robot (2) is moved by rotating at least one pulley (35) by means of at least one actuator (36).

**15.** Method according to claim 14, wherein each actuator (36) is constantly supplied with electrical energy in order to drive a pulley (36) or to provide a brake to the rotational motion of the pulley (35) during winding/ unwinding of the cable (3).

Fig. 1

Fig. 2

Fig. 3

Fig. 4

Fig. 5

Fig. 6

Fig. 7

Fig. 8

Fig. 9

Fig. 10

Europäisches
Patentamt

European
Patent Office

Office européen
des brevets

# EUROPEAN SEARCH REPORT

Application Number

**EP 21 19 9312**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2016/132284 A1 (AIRNAMICS D O O [SI]) 25 August 2016 (2016-08-25) | 1 | INV. B25J9/00 F16M11/42 F16M11/04 F16M11/06 F16M11/18 H04N7/18 |
| A | * page 7 - page 8; claims 1-8; figures 5-7 * | 2-15 | |
| | ----- | | |
| X | US 2020/047332 A1 (SALISBURY JR J KENNETH [US] ET AL) 13 February 2020 (2020-02-13) | 1 | |
| A | * the whole document * | 2-10 | |
| | ----- | | |
| A | WO 2021/144685 A1 (UNIV BOLOGNA ALMA MATER STUDIORUM [IT]) 22 July 2021 (2021-07-22) * the whole document * | 1-15 | |
| | ----- | | |

TECHNICAL FIELDS
SEARCHED      (IPC)

B25J
F16P
F16M
H04N

The present search report has been drawn up for all claims

| Place of search | Date of completion of the search | Examiner |
|---|---|---|
| Munich | 17 February 2022 | Masset, Candie |

EPO FORM 1503 03.82 (P04C01)

## ANNEX TO THE EUROPEAN SEARCH REPORT
## ON EUROPEAN PATENT APPLICATION NO.

EP 21 19 9312

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2022

| Patent document cited in search report | | Publication date | Patent family member(s) | | Publication date |
|---|---|---|---|---|---|
| WO 2016132284 | A1 | 25-08-2016 | SI | 24932 A | 31-08-2016 |
| | | | WO | 2016132284 A1 | 25-08-2016 |
| US 2020047332 | A1 | 13-02-2020 | JP | 2020517478 A | 18-06-2020 |
| | | | US | 2020047332 A1 | 13-02-2020 |
| | | | WO | 2018200670 A1 | 01-11-2018 |
| WO 2021144685 | A1 | 22-07-2021 | NONE | | |

EPO FORM P0459

For more details about this annex : see Official Journal of the European Patent Office, No. 12/82

**EP 4 155 033 A1**

**Patent documents cited in the description**

- US 6873355 B1
- EP 3318369 A1
- WO 2016132284 A1